# EUROPÄISCHE PATENTANMELDUNG

(11) **EP 3 216 566 A1**
(43) Veröffentlichungstag der Anmeldung: **13.09.2017**
(21) Anmeldenummer: 16159643.2
(22) Anmeldetag: 10.03.2016
(51) Int. Cl.: B25F 5/00

(54) **HANDWERKZEUGMASCHINE UND VERSTÄRKERANTENNE**

(71) Anmelder: HILTI Aktiengesellschaft, 9494 Schaan (LI)
(72) Erfinder: Cecchin, Holger, 82178 Puchheim (DE); Forstner, Markus, 86899 Landsberg (DE); Fuchs, Michael, 86825 Bad Wörishofen (DE); Matanovic, Josip, 85221 Dachau (DE)
(74) Vertreter: Hilti Aktiengesellschaft Corporate Intellectual Property

(57) **Zusammenfassung**

Elektrische Handwerkzeugmaschine mit einem Datenspeicher und einer mit dem Datenspeicher signalverbundenen Datenschnittstelle, über die werkzeugbezogene Daten mittels eines Terminals aus dem Datenspeicher auslesbar sind, wobei die Datenschnittstelle, zur drahtlosen Funk-Datenübertragung, eine Systemantenne und die elektrische Handwerkzeugmaschine eine von der Systemantenne verschiedene Verstärkerantenne aufweist, wobei die Verstärkerantenne mit der Systemantenne magnetisch gekoppelt ist und vorzugsweise auf oder in unmittelbarer Nähe der Systemantenne angebracht ist.

## Beschreibung

Die vorliegende Erfindung betrifft eine elektrische Handwerkzeugmaschine mit einem Datenspeicher und einer mit dem Datenspeichersignal verbundenen Datenschnittstelle über die werkzeugbezogene Daten mittels eines Terminals aus dem Datenspeicher auslesbar sind.

Elektrische Handwerkzeugmaschinen der eingangs genannten Art sind grundsätzlich aus dem Stand der Technik bekannt. Auf dem Datenspeicher können beispielsweise Betriebsdaten der Handwerkzeugmaschine oder im Betrieb auftretende Fehler in Form von Fehlercodes dokumentiert beziehungsweise eingespeichert werden. Diese Daten können bereits während der Entwicklung, aber auch im Servicefall oder während der Wartung der Handwerkzeugmaschine ausgelesen und ausgewertet werden.

Es ist Aufgabe der vorliegenden Erfindung, eine elektrische Handwerkzeugmaschine bereitzustellen, die ein komfortables und sicheres Auslesen des Datenspeichers ermöglicht.

Die Aufgabe wird dadurch gelöst, dass die Datenschnittstelle zur drahtlosen Datenübertragung ausgebildet ist. Die Datenschnittstelle weist, zur drahtlosen Datenübertragung, eine Systemantenne und die elektrische Handwerkzeugmaschine eine von der Systemantenne verschiedenen Verstärkerantenne auf, die magnetisch mit der Systemantenne gekoppelt ist. Vorzugsweise ist die Verstärkerantenne auf oder in unmittelbarer Nähe der Systemantenne angebracht.

Die Erfindung schließt die Erkenntnis ein, dass ein Auslesen der Datenspeicher bei elektrischen Handwerkzeugmaschinen des Standes der Technik zumeist über eine optische oder drahtgebundene Schnittstelle (z.B. einen USB-Port), erfolgt. Um eine elektrische Handwerkzeugmaschine über solche Datenschnittstellen auslesen zu können, muss die elektrische Handwerkzeugmaschine entweder an eine Netzstromversorgung (Steckdose) angeschlossen sein. Alternativ, im Fall einer akkubetriebenen Handwerkzeugmaschine, muss die Datenschnittstelle über eine Hilfsspannung versorgt werden, was typischerweise deutlich zu Lasten der Standzeit eines Handwerkzeug-Akkus geschieht.

Es wurde ebenfalls als nachteilig erkannt, dass optisch ausgebildete Schnittstellen hinsichtlich Verschmutzung und mechanischer Beschädigung sehr empfindlich sind. Akkubetriebene Handwerkzeugmaschinen des Standes der Technik benötigen nachteiliger Weise zusätzlich einen unhandlichen Adapter für den Datenaustausch, welcher die Handhabung der Handwerkzeugmaschine zusätzlich erschwert.

Durch die erfindungsgemäße Handwerkzeugmaschine wird eine Vermeidung dieser beschriebenen Nachteile begünstigt.

Dadurch, dass die Datenschnittstelle zur drahtlosen Funk-Datenübertragung ausgebildet ist und zusätzlich zu der Systemantenne eine Verstärkerantenne aufweist, die mit der Systemantenne magnetisch gekoppelt ist, wird eine Datenaustauschverbindung, die sowohl robust ist als auch eine hohe Reichweite aufweist, realisiert. Eine Datenübertragung kann nun beispielsweise stattfinden, wenn sich die Werkzeugmaschine noch in der Transportvorrichtung (zum Beispiel ein Werkzeugkoffer) befindet. Nunmehr kann die im Koffer befindliche Handwerkzeugmaschine einfach in die Nähe eines Kommunikationsterminals gebracht werden, sodass werkzeugbezogene Daten einfach ausgetauscht werden können.

Die Erfindung schließt diesbezüglich die Erkenntnis ein, dass neben den reinen Anforderungen an die Robustheit auch erhöhte Anforderungen an Reichweite, Kosten sowie den benötigten Bauraum existieren. Physikalische Grenzen einer drahtlosen Funkschnittstelle werden durch den zur Verfügung stehenden Bauraum und die Umgebung der Systemantenne bestimmt. Somit gibt es eine direkte Beziehung zwischen Volumen und Reichweite. Dadurch, dass zusätzlich zu der Systemantenne eine magnetisch angekoppelte Verstärkerantenne vorgesehen ist, wird es nun ermöglicht, dass nicht nur das magnetische Nahfeld der Systemantenne, sondern auch das elektromagnetische Fernfeld der Verstärkerantenne für die Reichweiten erhöhter Datenübertragung genutzt werden kann.

In einer besonders bevorzugten Ausgestaltung weist die Verstärkerantenne einen Dipol und eine induktive Koppelschleife auf. Dipol und Koppelschleife sind vorzugsweise miteinander einstückig als Draht ausgebildet.

Es hat sich als vorteilhaft herausgestellt, wenn die Systemantenne als PCB-Antenne ausgebildet ist. Die Systemantenne, beispielsweise in Form der PCB-Antenne, kann zusammen mit dem Datenspeicher Teil eines RFID-Tags (Transponder) sein.

Es hat sich als vorteilhaft herausgestellt, wenn der Dipol bezogen auf eine Abstimmfrequenz der Datenschnittstelle, als symmetrischer λ/2-Dipol ausgeführt ist. Alternativ kann der Dipol, bezogen auf eine Abstimmungsfrequenz der Datenschnittstelle, als unsymmetrischer λ/4-Dipol mit Abschlussglied ausgeführt sein. Es hat sich als vorteilhaft herausgestellt, wenn die Datenschnittstelle auf einen RFID-UHF Bereich abgestimmt ist, beispielsweise im 433-MHz-Band.

In einer besonders bevorzugten Ausgestaltung ist die Verstärkerantenne von einem selbstklebenden Etikett umfasst. Die Verstärkerantenne ist vorzugsweise als Metallisierungsschicht auf dem Etikett bereitgestellt. Somit kann die Handwerkzeugmaschine besonders einfach, insbesondere nachträglich, mit der Verstärkerantenne versehen werden und somit die Reichweite der Systemantenne erhöht werden. Vorzugsweise ist das Etikett bzw. die Verstärkerantenne auf einem Gehäuse, insbesondere Aussengehäuse, der Handwerkzeugmaschine angeordnet oder anzuordnen. Das Etikett bzw. die Verstärkerantenne kann auch innerhalb eines Gehäuses der Handwerkzeugmaschine angeordnet sein.

Es hat sich als vorteilhaft herausgestellt, wenn der Datenspeicher Teil einer Steuerelektronik der Handwerkzeugmaschine ist. Derart kann die elektrische Handwerkzeugmaschine konfiguriert werden, so kann beispielsweise ein neuer (höherer oder niedrigerer) Schwellenwert für die Tiefenentladung eines Handwerkzeug-Akkus festgelegt werden. Dies ist insbesondere bei neuentwickelten Akkutypen vorteilhaft.

In einer weiteren bevorzugten Ausgestaltung weist die elektrische Handwerkzeugmaschine ein zur elektrischen Stromversorgung der Handwerkzeugmaschine vorgesehenen Werkzeugakku auf. Die Datenschnittstelle kann durch den Werkzeugakku stromversorgt sein. Alternativ/oder zusätzlich kann die Datenschnittstelle ausschließlich über die Systemantenne und die mit der Systemantenne magnetisch verkoppelte Verstärkerantenne stromversorgt sein.

Die Aufgabe wird ebenfalls gelöst durch ein selbstklebendes Etikett zum Aufkleben auf ein Gehäuse einer elektrischen Handwerkzeugmaschine. Das Etikett weist eine Verstärkerantenne mit einem Dipol und einer induktiven Koppelschleife auf, wobei Dipol und Koppelschleife vorzugsweise miteinander einstückig als Metallisierungsschicht auf dem Etikett bereitgestellt sind. Das selbstklebende Etikett kann durch die mit Bezug auf die elektrische Handwerkzeugmaschine bereits vorbeschriebenen Merkmale weitergebildet sein.

Die Erfindung wird ebenfalls gelöst durch die Verwendung eines Dipols mit einstückig daran ausgebildeter induktiver Koppelschleife als Verstärkerantenne für eine drahtlose Datenschnittstelle einer elektrischen Handwerkzeugmaschine. Vorzugsweise ist die Verstärkerantenne als selbstklebendes Etikett zum Aufkleben auf ein Gehäuse einer elektrischen Handwerkzeugmaschine bereitgestellt. Die Erfindung bezüglich der Verwendung kann durch die mit Bezug auf die elektrische Handwerkzeugmaschine oder die mit Bezug auf das selbstklebende Etikett beschriebenen Merkmale in entsprechender Weise weitergebildet sein.

Weitere Vorteile ergeben sich aus der folgenden Figurenbeschreibung. In den Figuren sind verschiedene Ausführungsbeispiele der vorliegenden Erfindung dargestellt. Die Figuren, die Beschreibung und die Ansprüche enthalten zahlreiche Merkmale in Kombination. Der Fachmann wird die Merkmale zweckmässigerweise auch einzeln betrachten und zu sinnvollen weiteren Kombinationen zusammenfassen.

In den Figuren sind gleiche und gleichartige Komponenten mit gleichen Bezugszeichen beziffert.

Es zeigen:
- Fig. 1: ein Ausführungsbeispiel einer erfindungsgemäßen Handwerkzeugmaschine;
- Fig. 2: eine Systemantenne mit magnetisch gekoppelter Verstärkerantenne; und
- Fig. 3: ein Ausführungsbeispiel einer Verstärkerantenne.

### Ausführungsbeispiel:

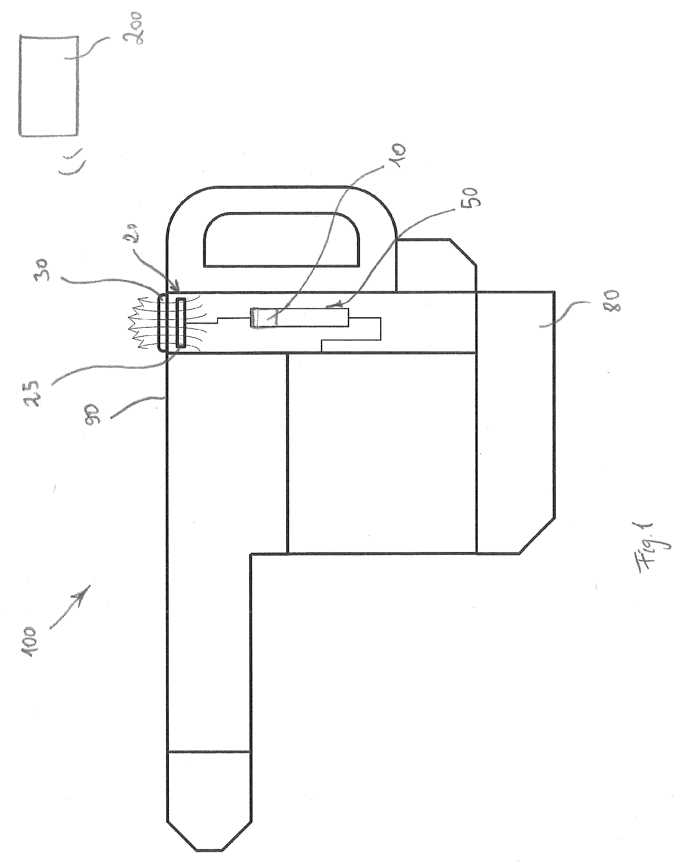

Fig. 1 zeigt eine elektrische Handwerkzeugmaschine 100 mit einem Datenspeicher 10 und einer mit dem Datenspeicher 10 signalverbundenen Datenschnittstelle 20. Der Datenspeicher 10 ist Teil einer Steuerelektronik 50 der Handwerkzeugmaschine 100.

Auf der rechten Seite der Fig. 1 ist ein Terminal 200 zu erkennen mittels dem werkzeugbezogene Daten aus dem Datenspeicher 10 und über die Datenschnittstelle 20 ausgelesen werden können.

Die Datenschnittstelle 20 weist, zur drahtlosen Datenübertragung, eine Systemantenne 25 auf, hier beispielhaft in Form einer PCB-Antenne.

Die Handwerkzeugmaschine weist weiterhin eine Verstärkerantenne 30 auf, die zusätzlich zur Systemantenne 25 vorgesehen ist. Im vorliegend dargestellten Ausführungsbeispiel ist die Verstärkerantenne 30 in unmittelbare Nähe der Systemantenne 25 angebracht. Im dargestellten Ausführungsbeispiel ist die Verstärkerantenne 30 von einem selbstklebenden Etikett umfasst, das vorliegend auf einem Gehäuse 90 der Handwerkzeugmaschine 100 aufgeklebt ist.

Unter Anordnung in unmittelbarer Nähe der Systemantenne soll im Rahmen der vorliegenden Erfindung eine Anordnung der Verstärkerantenne zu verstehen sein, bei der die Systemantenne magnetisch mit der Verstärkerantenne gekoppelt ist.

Im Ausführungsbeispiel der Fig. 1 ist der Datenspeicher 10 Teil einer Steuerelektronik 50 der Handwerkzeugmaschine 100. Demgemäß können beispielsweise werkzeugbezogene Daten in Form von Steuerungsparametern für die Steuerelektronik drahtlos per Funk vom Terminal 200 auf die Handwerkzeugmaschine 100 übertragen werden.

Wie ebenfalls der Fig. 1 entnommen werden kann, weist die elektrische Handwerkzeugmaschine 100 einen Werkzeugakku 80 auf. Dieser Werkzeugakku 80 ist zur elektrischen Stromversorgung der Handwerkzeugmaschine 100 vorgesehen und dient im vorliegenden Ausführungsbeispiel nicht zur elektrischen Stromversorgung des Datenspeichers 10. Vielmehr ist der Datenspeicher 10 allein durch elektromagnetische Energie, die vom Terminal 200 auf die Verstärkerantenne 30 beziehungsweise die Systemantenne 2 übertragen wird, stromversorgt.

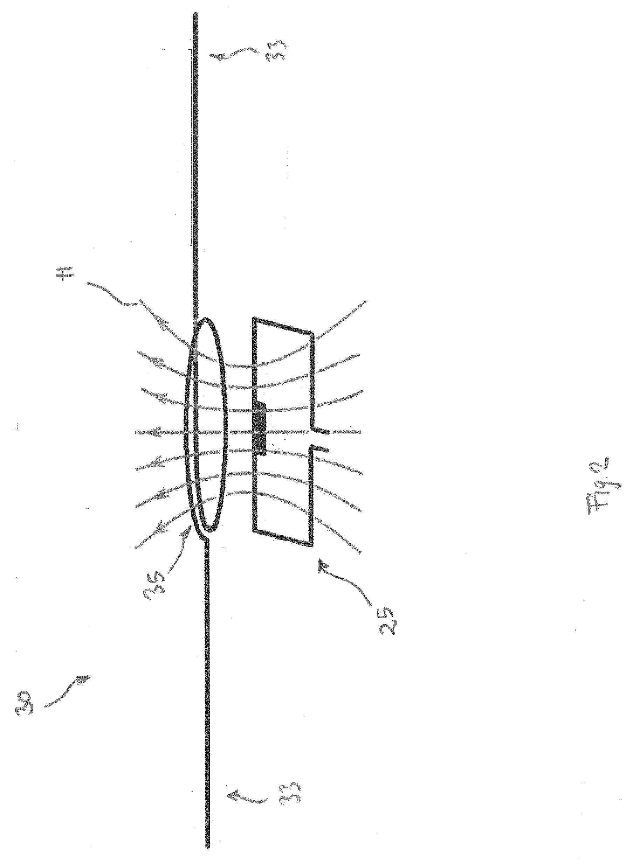

Fig. 2 zeigt nun schematisch eine Systemantenne 25 in Form einer PCB-Antenne. Oberhalb der Systemantenne 25 ist eine Verstärkerantenne 30 dargestellt.

Die Verstärkerantenne 30 weist einen Dipol 33 und eine induktive Koppelschleife 35 auf. Dipol 33 und Koppelschleife 35 sind miteinander einstückig als Draht ausgebildet.

Über die Koppelschleife 35 ist die Verstärkerantenne 30 magnetisch mit der Systemantenne 25 gekoppelt. Dies ist durch das H-Feld angedeutet.

Mit der in Fig. 2 gezeigte Anordnungen sind es möglich, nicht nur das magnetische Nahfeld, sondern auch das elektrische Fernfeld durch die Ausprägung des Dipols 33 zu empfangen und dieses magnetisch, über die Koppelschleife 35, in die als PCB-Antenne bereitgestellte Systemantenne 25 einzukoppeln.

Beispielhaft ist der Dipol 33 als symmetrischer λ/2-Dipol ausgeführt.

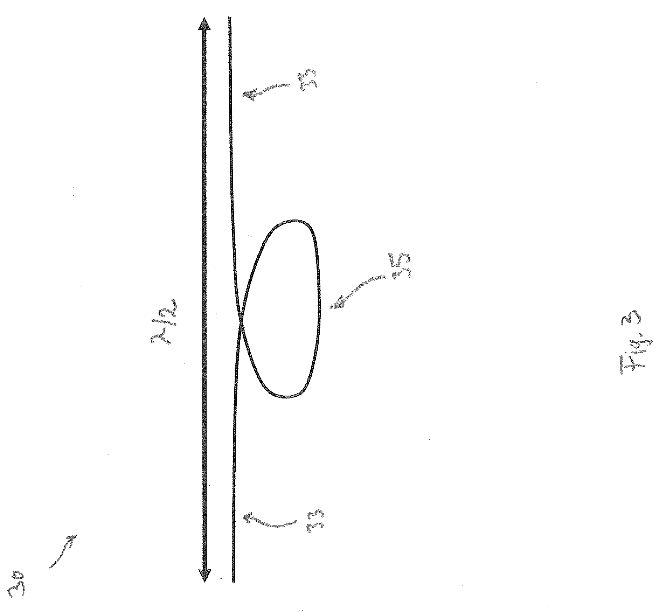

Fig. 3 zeigt schließlich die Verstärkerantenne 30 mit einem symmetrischen λ/2-Dipol und einer induktiven Koppelschleife 35, wobei Dipol und Koppelschleife 35 miteinander einstückig als Draht ausgebildet sind. Die in Fig. 3 dargestellte Verstärkerantenne kann beispielsweise von einem selbstklebenden Etikett umfasst sein, das auf ein Gehäuse 90 einer elektrischen Handwerkzeugmaschine 100 (vgl. Fig. 1) aufzukleben ist oder aufgeklebt ist. Die Verstärkerantenne 30 in ihrer einfachsten Form gemäß Fig. 3 wird im Rahmen der erfindungsgemäßen Verwendung als Verstärkerantenne 30 für eine drahtlose Schnittstelle 20, beziehungsweise deren Systemantenne 25 verwendet (vgl. Fig. 1 und 2).

### Bezugszeichenliste

- 10: Datenspeicher
- 20: Datenschnittstelle
- 25: Systemantenne
- 30: Verstärkerantenne
- 33: Dipol
- 35: Koppelschleife
- 50: Steuerelektronik
- 80: Werkzeugakku
- 90: Gehäuse
- 100: Handwerkzeugmaschine
- 200: Terminal

## Patentansprüche

1. Elektrische Handwerkzeugmaschine (100) mit einem Datenspeicher (10) und einer mit dem Datenspeicher (10) signalverbundenen Datenschnittstelle (20), über die werkzeugbezogene Daten mittels eines Terminals (200) aus dem Datenspeicher (10) auslesbar sind
**dadurch gekennzeichnet, dass** die Datenschnittstelle (20), zur drahtlosen Funk-Datenübertragung, eine Systemantenne (25) und die elektrische Handwerkzeugmaschine (100) eine von der Systemantenne (25) verschiedene Verstärkerantenne (30) aufweist, wobei die Verstärkerantenne (30) mit der Systemantenne (25) magnetisch gekoppelt ist und vorzugsweise auf oder in unmittelbarer Nähe der Systemantenne (25) angebracht ist.

2. Elektrische Handwerkzeugmaschine (100) nach Anspruch 1,
**dadurch gekennzeichnet, dass** die Verstärkerantenne (30) einen Dipol (33) und eine induktive Koppelschleife (35) aufweist, wobei Dipol (33) und Koppelschleife (35) vorzugsweise mitteiander einstückig als Draht ausgebildet sind.

3. Elektrische Handwerkzeugmaschine (100) nach Anspruch 1 oder 2,
**dadurch gekennzeichnet, dass** die Systemantenne (25) als PCB-Antenne ausgebildet ist.

4. Elektrische Handwerkzeugmaschine (100) nach Anspruch 2 oder 3,
**dadurch gekennzeichnet, dass** der Dipol (33), bezogen auf eine Abstimmfrequenz der Datenschnittstelle (20), als symmetrischer λ/2-Dipol oder ein unsymmetrischer λ/4-Dipol mit Abschlussglied ausgeführt ist.

5. Elektrische Handwerkzeugmaschine (100) nach einem der vorangehenden Ansprüche,
**dadurch gekennzeichnet, dass** die Datenschnittstelle (25) auf einen RFID-UHF Bereich abgestimmt ist.

6. Elektrische Handwerkzeugmaschine (100) nach einem der vorangehenden Ansprüche,
**dadurch gekennzeichnet, dass** die Verstärkerantenne (30) von einem selbstklebenden Etikett umfasst ist, wobei die Verstärkerantenne (30) vorzugsweise als Metallisierungsschicht auf dem Etikett bereitgestellt ist.

7. Elektrische Handwerkzeugmaschine (100) nach einem der vorangehenden Ansprüche,
**dadurch gekennzeichnet, dass** der Datenspeicher (10) Teil einer Steuerelektronik (50) der Handwerkzeugmaschine (100) ist.

8. Elektrische Handwerkzeugmaschine (100) nach Anspruch 1,
**dadurch gekennzeichnet, dass** die Elektrische Handwerkzeugmaschine (100) einen zur elektrischen Stromversorgung der Handwerkzeugmaschine vorgesehenen Werkzeugakku (80) aufweist und die Datenschnittstelle (20) durch den Werkzeugakku (80) und/ oder die Systemantenne (25) stromversorgt wird.

9. Selbstklebendes Etikett zum Aufkleben auf ein Gehäuse (90) einer elektrischen Handwerkzeugmaschine (100) wobei das Etikett eine Verstärkerantenne (30) mit einem Dipol (33) und einer induktiven Koppelschleife (35) aufweist, wobei Dipol (33) und Koppelschleife (35) vorzugsweise mitteiander einstückig als Metallisierungsschicht auf dem Etikett bereitgestellt sind.

10. Verwendung einer eines Dipols (33) mit einstückig daran ausgebildeter induktiver Koppelschleife (35) als Verstärkerantenne für eine drahtlose Datenschnittstelle (20) einer Elektrische Handwerkzeugmaschine (100).
